Europäisches Patentamt

European Patent Office

Office européen des brevets

(11) Publication number: **0 003 889**
A1

# EUROPEAN PATENT APPLICATION

(21) Application number: **79300229.6**

(22) Date of filing: **15.02.79**

(51) Int. Cl.²: **F 16 D 65/02**

(30) Priority: **24.02.78 JP 23597/78 U**

(43) Date of publication of application:
**05.09.79 Bulletin 79/18**

(84) Designated contracting states:
**DE FR GB IT**

(71) Applicant: **SUMITOMO ELECTRIC INDUSTRIES LTD.**
**No. 15, Kitahama 5-chome Higashi-ku Osaka-shi**
**Osaka(JP)**

(72) Inventor: **Yamamoto, Masachika c/o Sumitomo**
**Electric**
**Industries Ltd. Itami Works No. 1, Aza miyagashi**
**Koya Itami-shi Hyogo(JP)**

(74) Representative: **Waite, Anthony William et al,**
**MARKS & CLERK Alpha Tower ATV Centre**
**Birmingham B1 1TT(GB)**

(54) Disc brake protector.

(57) A metal protector (10) for a disc brake piston boot attached to a pad backing plate. The protector has a main surface area (11) substantially equal in outline to the pad backing plate. Flanges (12, 13) are used to attach the protector to the backing plate. The protector may be coated with a lubricant or acoustic damping material to assist in minimising squeal and chatter.

F I G. 1

EP 0 003 889 A1

Croydon Printing Company Ltd.

0003889

This invention relates to a metal protector for preventing damage to a piston boot, which is attached to a pad backing plate of a disc brake.

The attachment of a plate member to the pad backing plate has been employed in order to prevent squeal generally caused by brake pads when the brakes are applied.

However, in conventional types of disc brakes, particularly the pin-slide type, frequently accident occurs when the caliper is removed and reset thereafter in order to check and replace the pads. In these situations the piston boot may be damaged by contacting the plate member of the pad backing plate.

Accordingly, it is an object of this invention to prevent the above-mentioned damage to the piston boot. Another object of this invention is to provide an improved disc brake assembly that can be easily manufactured and also offers improved safety features.

Briefly, in accordance with this invention, these objects are accomplished by attaching a metal protector for a piston boot to a pad backing plate. The metal protector is provided with a main plate substantially identical in outline shape to the pad backing plate shape. A flange on an upper edge of the main plate is adapted to attach the main plate to the pad backing plate and detent attachment pieces may also be provided, preferably at each end of the main plate. Further, the objects may be more effectively accomplished by providing a coating film which serves to lubricate either or both of the protector surfaces and thus helps to dampen, or absorb any vibrational chattering and squeal on either or both of said surfaces.

The invention will now be described, by way of
example, with reference to the accompanying drawings,
in which:

Figure 1 is a perspective view showing a metal
protector according to the present invention;

Figure 2 is a side view showing the metal protector
attached to a brake pad; and

Figure 3 is a plan view showing one form of disc
brake to which the present invention is applied.

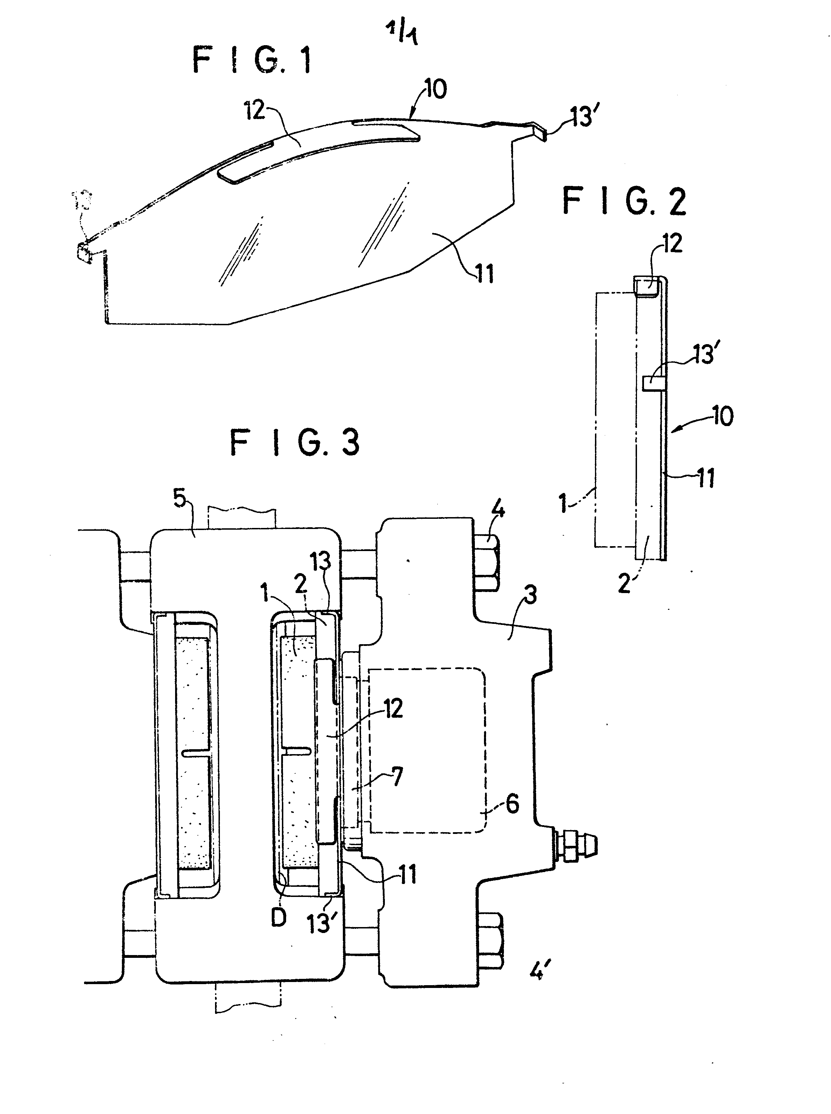

As shown in Figures 1 and 2, of the drawings,
a metal protector 10 comprises a main plate 11
substantially identical in outline shape to a pad
backing plate 2 integral with a pad 1.   A flange 12
is provided along part of an upper edge of the main
plate 11 to form part of attachment means for the plate
and detent pieces 13 are disposed on opposite sides of
the plate 11, serving to attach the plate 11 to respective
ear portions provided on the pad backing plate 2.
The metal protector 10 is attached to the pad backing
plate 2 as shown in Figure 2 and the pad thus attached
is employed in a disc brake as shown in Figure 3.

In Figure 3, pins 4 and 4' are fixedly secured to
both ends of a caliper 3 and slidably inserted into a
stationary member 5.  As a result, the caliper 3 is
floatingly supported.   The pad backing plate 2 engages
an inside portion of the stationary member 5 and is pressed
against a disc D by a piston 6 incorporated in the caliper
3.   A piston boot 7 is mounted between an inlet of a
cylinder having the piston 6 and the piston itself to
thereby prevent entrance of dust into the cylinder.

In a disc brake of this construction, in order to
check or replace the pads, one of the pins 4 and 4'
is first removed and the caliper 3 is rotated about the
remaining pin.   Thus, the pad 1 is exposed and removed according to wear or maintenance schedules.   After
checking or replacement of the pad 1, the caliper
is reversely rotated to thereby return to its original
position.   At this time, since the pins 4 and 4' are
slidably inserted into the stationary member 5, the
caliper 3 is liable to closely approach the stationary
member 5.   Accordingly, there may be a danger that
the piston boot 7 will come into contact with the pad
backing plate 8 during rotation of the caliper 3
and be damaged by the backing plate.   However, in the
present invention, the flange 12 provided on the upper side
of the metal protector 10 covers the corners and upper
edges of the backing plate 2 and potential damage to the
piston boot 7 due to the sharp corners of the backing
plate 2 can be prevented.

Further, in order to prevent squeal caused by the
brake pads, it is preferable to form a coating film on
the metal protector which serves to lubricate either or
both of the metal protector surfaces and this helps to
dampen or absorb any vibrational chattering and squeal
on either or both of said surfaces.

Thus, according to the present invention, the metal
protector plate can serve to prevent not only the squeal
caused by the pads but also damage to the piston boot.
Moreover, it can be made merely by stamping out and bending
from thin metal plate, resulting in a low manufacturing
cost.   It is apparent that modifications to this
invention are possible without departing from the
essential scope thereof.

C L A I M S:

1. A protector plate for use in a disc brake of the type having a piston boot in which a caliper is supported to be slidable in the axial direction of a disc pad and a pad backing plate through pins fixedly secured to both ends of said caliper and slidably inserted in a stationary member, the protector plate being substantially identical in shape to said disc pad backing plate, and means adapted to attach said protector plate to said pad backing plate, said means including a flange on an upper edge of said protector plate.

2. A metal protector according to Claim 1, wherein a coating film having lubricating and/or vibrating absorbing functions is formed on at least one surface of said main plate.

3. A metal protector according to Claim 1, wherein a coating film having lubricating and/or vibrating absorbing functions is formed on both surfaces of said protector plate.

4. A metal protector according to Claims 1, 2 or 3 further comprising detent members adapted to attach said protector plate to said pad backing plate at each end of said protector plate.

5.    A disc brake of the type having a piston boot in which a caliper is supported to be slidable in the axial direction of a disc pad and a pad backing plate through pins fixedly secured to both ends of said caliper and slidably inserted in a stationary member, and incorporating a metal protector plate according to any one of the preceding claims.

F I G. 1

F I G. 2

F I G. 3

0003889

European Patent Office

**EUROPEAN SEARCH REPORT**

Application number

EP 79 300 229.6

## DOCUMENTS CONSIDERED TO BE RELEVANT

| Category | Citation of document with indication, where appropriate, of relevant passages | Relevant to claim |
|---|---|---|
| X | <u>DE - A - 2 602 798</u> (FERODO) <br> * page 5, lines 3 to 29; fig. 1 to 5 * <br> & FR - A - 2 299 559 | 1,2 <br> 4 |
| | -- | |
| X | <u>DE - A - 2 502 459</u> (GIRLING) <br> * page 1 to 3, claims 1, 2 and 5; fig. 1 to 11 * | 1,3, <br> 5 |
| | -- | |
| | <u>DE - U - 7 006 317</u> (BREKU REIBBELAG) <br> * claims 1 and 3, fig. 2 * | 1,2 |
| | -- | |
| | <u>DE - A - 2 219 669</u> (TEVES) <br> * claims 1 to 3; fig. 1 to 3 * | 1,5 |
| | -- | |
| A | <u>US - A - 4 027 752</u> (BRIX) <br> * whole document * | |
| | ---- | |

**CLASSIFICATION OF THE APPLICATION (Int. Cl.²)**

F 16 D 65/02

**TECHNICAL FIELDS SEARCHED (Int.Cl.²)**

F 16 D 65/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 09-05-1979 | LUDWIG |

EPO Form 1503.1   06.78